# EUROPÄISCHE PATENTANMELDUNG

(11) **EP 3 369 537 A1**
(43) Veröffentlichungstag der Anmeldung: **05.09.2018**
(21) Anmeldenummer: 17179847.3
(22) Anmeldetag: 05.07.2017
(51) Int. Cl.: B25J 21/02, B08B 15/02, B22F 3/105

(54) **HANDHABUNGSEINRICHTUNG FÜR EINE VORRICHTUNG ZUR ADDITIVEN HERSTELLUNG DREIDIMENSIONALER OBJEKTE**

(30) Priorität: 01.03.2017 DE 102017104303
(71) Anmelder: CL Schutzrechtsverwaltungs GmbH, 96215 Lichtenfels (DE)
(72) Erfinder: Schödel, Frank, 96317 Kronach (DE); Stammberger, Jens, 96472 Rödental (DE)
(74) Vertreter: Hafner & Kohl

(57) **Zusammenfassung**

Handhabungseinrichtung (1) für eine Vorrichtung zur additiven Herstellung dreidimensionaler Objekte, welche Handhabungseinrichtung (1) zur Handhabung eines additiv hergestellten dreidimensionalen Objekts eingerichtet ist, umfassend: eine Handhabungskammer (2), welche einen durch eine oder mehrere Handhabungskammerwandungen (3) begrenzten Handhabungs- kammerinnenraum (4) umfasst, wobei wenigstens eine Handhabungskammerwandung (3) eine eine Zugangsmöglichkeit, insbesondere für einen Benutzer, in den Handhabungskammerinnenraum (4) schaffende Zugangsöffnung (5) umfasst, wobei die wenigstens eine Zugangsöffnung (5) über ein dieser zugeordnetes schiebetürartiges Verschlusselement (6), welches in einer vertikalen Richtung schiebebeweglich zwischen einer Offenstellung, in welcher das schiebetürartige Verschlusselement (6) die wenigstens eine Zugangsöffnung (5) freigibt, und einer Schließstellung, in welcher das schiebetürartige Verschlusselement (6) die Zugangsöffnung (5) nicht freigibt, relativ zu der die Zugangsöffnung (5) umfassenden Handhabungskammerwandung (3) gelagert ist, öffen- und verschließbar ist.

## Beschreibung

Die Erfindung betrifft eine Handhabungseinrichtung für eine Vorrichtung zur additiven Herstellung dreidimensionaler Objekte, welche Handhabungseinrichtung zur Handhabung eines additiv hergestellten dreidimensionalen Objekts eingerichtet und eine Handhabungskammer umfasst, welche einen durch eine oder mehrere Handhabungskammerwandungen begrenzten Handhabungskammerinnenraum umfasst, wobei wenigstens eine Handhabungskammerwandung wenigstens eine eine Zugangsmöglichkeit in den Handhabungskammerinnenraum schaffende Zugangsöffnung umfasst.

Entsprechende Handhabungseinrichtungen sind dem Grunde nach bekannt. Hauptfunktion entsprechender Handhabungseinrichtungen ist die Handhabung additiv hergestellter dreidimensionaler Objekte. Eine entsprechende Handhabung additiv hergestellter dreidimensionaler Objekte ist typischerweise im Zusammenhang mit dem sogenannten "Auspacken" additiv hergestellter dreidimensionaler Objekte, d. h. der Entfernung von dem die additiv hergestellten Objekte umgebenden, nicht verfestigtem Baumaterial, erforderlich.

Entsprechende Handhabungseinrichtungen sind bisher zumeist so konzipiert, dass die Möglichkeit eines Austritts von Baumaterial aus der Handhabungskammer besteht. Ein Austritt von Baumaterial aus der Handhabungskammer kann beispielsweise durch sich von einem eine eine Zugangsmöglichkeit in den Handhabungskammerinnenraum schaffenden Zugangsöffnung verschließenden Verschlusselement lösendes Baumaterial gegeben sein. Ein Lösen von Baumaterial von dem Verschlusselement erfolgt insbesondere dann, wenn das Verschlusselement in eine die Zugangsöffnung freigebende Offenstellung bewegt ist.

Der Erfindung liegt die Aufgabe zugrunde, eine Handhabungseinrichtung anzugeben, welche die Möglichkeit eines Austritts von Baumaterial aus der Handhabungskammer verhindert bzw. zumindest reduziert.

Die Aufgabe wird durch eine Handhabungseinrichtung gemäß Anspruch 1 gelöst. Die hierzu abhängigen Ansprüche betreffen mögliche Ausführungsformen der Handhabungseinrichtung.

Die hierin beschriebene Handhabungseinrichtung ist zur Handhabung eines oder mehrerer additiv hergestellter dreidimensionaler Objekte eingerichtet. Die vermittels der Handhabungseinrichtung gegebene Möglichkeit der Handhabung additiv hergestellter dreidimensionaler Objekte, d. h. z. B. technischer Bauteile bzw. technischer Bauteilgruppen, ist typischerweise im Zusammenhang mit dem sogenannten "Auspacken" additiv hergestellter dreidimensionaler Objekte, d. h. der Entfernung von dem die additiv hergestellten Objekte umgebenden, nicht verfestigtem Baumaterial, erforderlich. Die Handhabungseinrichtung kann, wie im Weiteren erläutert, einer Vorrichtung zur additiven Herstellung dreidimensionaler Objekte zugeordnet sein bzw. einen funktionellen Bestandteil einer solchen Vorrichtung bilden. Die Handhabungseinrichtung kann jedoch auch eine zu einer Vorrichtung zur additiven Herstellung dreidimensionaler Objekte gesonderte Einrichtung sein.

Die Handhabungseinrichtung umfasst eine Handhabungskammer. Die Handhabungskammer umfasst eine oder mehrere Handhabungskammerwandungen. Wenigstens eine Handhabungskammerwandung bildet bei bestimmungsgemäßer Anordnung der Handhabungskammer die Oberseite der Handhabungskammer, wenigstens eine der die Oberseite der Handhabungskammer bildenden Handhabungskammerwandung gegenüber liegend angeordnete oder ausgebildete Handhabungskammerwandung bildet bei bestimmungsgemäßer Anordnung der Handhabungskammer eine Boden- bzw. Unterseite der Handhabungskammer. Die typischerweise plattenartig bzw. förmig ausgebildeten Handhabungskammerwandungen können so relativ zueinander angeordnet sein, dass sich eine quaderartige bzw. quaderähnliche Grundform der Handhabungskammer ergibt. Die Handhabungskammerwandungen begrenzen einen Handhabungskammerinnenraum, in welchem ein "auszupackendes" additiv hergestelltes dreidimensionales Objekt anordenbar ist. Wenigstens eine Handhabungskammerwandung umfasst eine bzw. wenigstens einen Teil einer Zugangsöffnung, welche eine Zugangsmöglichkeit, insbesondere für einen Benutzer, in den Handhabungskammerinnenraum schafft. Die typischerweise durch eine Aussparung in der oder den jeweiligen Handhabungskammerwandung(en) gebildete Zugangsöffnung ermöglicht ein Eingreifen in den Handhabungskammerinnenraum, etwa um ein additiv hergestelltes dreidimensionales Objekt "auszupacken" oder ein "ausgepacktes" additiv hergestelltes dreidimensionales Objekt aus dem Handhabungskammerinnenraum zu entnehmen.

Die wenigstens eine Zugangsöffnung ist über ein dieser zugeordnetes schiebetürartiges Verschlusselement - das Verschlusselement kann sonach als Schiebetür ausgebildet sein bzw. eine solche umfassen - öffen- und verschließbar; die wenigstens eine Zugangsöffnung kann über das dieser zugeordnete schiebetürartige Verschlusselement sonach geöffnet (freigegeben) und verschlossen (nicht freigegeben) werden. Das schiebetürartige Verschlusselement ist, insbesondere in einer linearen Bewegungsbahn, in einer vertikalen Richtung zwischen einer Offenstellung, in welcher das schiebetürartige Verschlusselement die wenigstens eine Zugangsöffnung freigibt, sodass eine Eingriffs- bzw. Zugangsmöglichkeit in den Handhabungskammerinnenraum geschaffen ist, und einer Schließstellung, in welcher das schiebetürartige Verschlusselement die Zugangsöffnung nicht freigibt, sodass keine Eingriffs- bzw. Zugangsmöglichkeit in den Handhabungskammerinnenraum geschaffen ist, relativ zu der die Zugangsöffnung umfassenden Handhabungskammerwandung gelagert. Unter einer vertikalen Richtung bzw. Bewegungsbahn kann, wie sich im Weiteren ergibt, auch eine um einen gewissen Winkel bezüglich einer vertikalen Raumachse geneigt verlaufende Richtung bzw. Bewegungsbahn zu verstehen sein; wesentlich ist, dass das schiebetürartige Verschlusselement durch Schiebebewegungen zwischen der Offen- und der Schließstellung in unterschiedliche vertikale Positionen bringbar ist, mithin in der Offen- und der Schließstellung unterschiedliche vertikale Positionen einnimmt.

Zur schiebebeweglichen Lagerung des schiebetürartigen Verschlusselements kann dem schiebetürartigen Verschlusselement eine Lagerungs- bzw. Führungseinrichtung, welche zur schiebebeweglichen Lagerung bzw. Führung des schiebetürartigen Verschlusselements zwischen der Offenstellung und der Schließstellung, und umgekehrt, eingerichtet ist, zugeordnet sein. Die Lagerungs- bzw. Führungseinrichtung kann erste Lagerungs- bzw. Führungselemente, welche an der die Zugangsöffnung umfassenden Handhabungskammerwandung angeordnet oder ausgebildet sind, und relativ zu diesen bewegbar gelagerte zweite Lagerungs- bzw. Führungselemente, welche mit dem schiebetürartigen Verschlusselement bewegungsgekoppelt sind, umfassen. Die Lagerungs- bzw. Führungseinrichtung kann z. B. als Kolben-Zylinder-Anordnung ausgebildet sein oder wenigstens eine solche umfassen; mithin können erste Lagerungs- bzw. Führungselemente jeweils durch einen Zylinder und zweite Lagerungs- bzw. Führungselemente jeweils durch eine innerhalb des Zylinders angeordnete Kolbenstange gebildet sein.

Das schiebetürartige Verschlusselement kann einen, insbesondere rahmenartigen bzw. -förmigen, Grundkörper umfassen. An dem Grundkörper kann eine eine Einblickmöglichkeit in den Handhabungskammerinnenraum schaffende Sichtscheibe, d. h. z. B. eine Glasscheibe, angeordnet oder ausgebildet sein. An der Sichtscheibe können von einem Benutzer oder einem Roboter nutzbare Betätigungs- oder Handhabungselemente angeordnet oder ausgebildet sein. Bei entsprechenden Betätigungs- bzw. Handhabungselementen kann es sich um z. B. einen isolierten Eingriff in den Handhabungskammerinnenraum ermöglichende Handschuhe (Schutzhandschuhe) handeln; mithin kann die Handhabungskammer als Handschuhkasten ("Glovebox") ausgebildet sein.

Die in der vertikalen Richtung, d. h. in einer vertikal ausgerichteten, wie erwähnt, insbesondere linearen, Bewegungsbahn, schiebebewegliche Lagerung des schiebetürartigen Verschlusselements stellt eine probate Maßnahme dar, um einen unerwünschten Austritt von Baumaterial aus der Handhabungskammer zu verhindern bzw. zumindest zu reduzieren. Eine Verbesserung der hierin beschriebenen Handhabungseinrichtung besteht insbesondere gegenüber aus dem Stand der Technik bekannten Handhabungseinrichtungen mit klapp- bzw. schwenkbar gelagerten Verschlusselementen, bei welchen bei einem Klapp- bzw. Schwenkvorgang bisweilen sogar die Gefahr einer Kontamination eines Benutzers mit Baumaterial besteht.

Die wenigstens eine die wenigstens eine Zugangsöffnung umfassende Handhabungskammerwandung ist zweckmäßig, insbesondere in einem Winkelbereich zwischen 1 und 45°, bevorzugt in einem Winkelbereich zwischen 5 und 15°, besonders bevorzugt in einem Winkel von 10°, schräg bezüglich einer vertikalen Raumachse verlaufend angeordnet oder ausgebildet. Aus der bezüglich einer vertikalen Raumachse schräg verlaufenden Anordnung bzw. Ausbildung der die Zugangsöffnung umfassenden Handhabungskammerwandung ergibt sich, dass die Oberseite der Handhabungskammer kleiner als die Boden- bzw. Unterseite der Handhabungskammer ist.

Die wenigstens eine die wenigstens eine Zugangsöffnung umfassende Handhabungskammerwandung ist also insbesondere derart schräg bezüglich einer vertikalen Raumachse verlaufend angeordnet oder ausgebildet, dass die bzw. eine die Boden- bzw. Unterseite der Handhabungskammer bildende Handhabungskammerwandung flächenmäßig größer als die Oberseite der Handhabungskammer bildende Handhabungskammerwandung ist. Die die Boden- bzw. Unterseite der Handhabungskammer bildende Handhabungskammerwandung bildet derart wenigstens in dem Bereich, in welchem diese die die Oberseite der Handhabungskammer bildende Handhabungskammerwandung flächenmäßig überragt, insbesondere in der Offenstellung des schiebetürartigen Verschlusselements, einen Sammelbereich für Baumaterial. Sich gegebenenfalls von dem schiebetürartigen Verschlusselement lösendes Baumaterial sammelt sich in dem einen Teilbereich der Bodenfläche der Handhabungskammer bildenden Sammelbereich, ein unerwünschter Austritt von Baumaterial aus der Handhabungskammer ist damit nicht bzw. kaum möglich.

Wie erwähnt, kann das schiebetürartige Verschlusselement einen, insbesondere rahmenartigen bzw. -förmigen, Grundkörper umfassen. An dem Grundkörper kann ein einen ersten Abschnitt der Oberseite der Handhabungskammer bildendes, insbesondere plattenartiges bzw. -förmiges, Ansatzelement angeordnet oder ausgebildet sein. Das Ansatzelement ist bezüglich der Ebene des Grundkörpers winklig ausgerichtet an dem Grundkörper angeordnet oder ausgebildet. Insbesondere ist das Ansatzelement in der bzw. parallel zu der Ebene der Oberseite der Handhabungskammer ausgerichtet an dem Grundkörper angeordnet oder ausgebildet.

Die einen zweiten Abschnitt der Oberseite der Handhabungskammer bildende Handhabungskammerwandung weist typischerweise eine an die geometrisch-konstruktive Gestaltung des Ansatzelements angepasste Aussparung auf, um (in der Schließstellung des schiebetürartigen Verschlusselements) eine geschlossene Oberseite der Handhabungskammer zu bilden. Das Ansatzelement deckt die Aussparung in der Schließstellung des schiebetürartigen Verschlusselements typischerweise vollständig ab. Das Ansatzelement und die die Aussparung aufweisende Handhabungskammerwandung bilden in der Schließstellung des Verschlusselements gemeinsam die geschlossene Oberseite der Handhabungskammer. Die an die geometrisch-konstruktive Gestaltung des Ansatzelements angepasste Aussparung ist zweckmäßig, als diese eine Schiebebewegung des schiebetürartigen Verschlusselements zwischen der Offen- und Schließstellung, und umgekehrt, in einer (einzigen) Bewegungsbahn ermöglicht. Es besteht sonach keine Möglichkeit, dass ein an dem Ansatzelement angeordnetes oder ausgebildetes, weiter unten erwähntes, Dichtungselement bei Schiebebewegungen des schiebetürartigen Verschlusselements zwischen der Offen- und Schließstellung, und umgekehrt, gegen die Oberseite der Handhabungskammer bewegt wird. Zudem kann durch die an die geometrisch-konstruktive Gestaltung des Ansatzelements angepasste Aussparung ein Freiraum gebildet sein, welcher eine Kontaktierung von an dem Verschlusselement gegebenenfalls angeordneten oder ausgebildeten Funktionselementen, d. h. z. B. entsprechenden weiter oben erwähnten Betätigungs- bzw. Handhabungselementen, mit der die Oberseite der Handhabungskammer bildenden Handhabungskammerwandung und ein damit etwaig verbundenes Lösen von an den Betätigungs- bzw. Handhabungselementen anhaftendem Baumaterial bei Bewegungen des Verschlusselements zwischen der Offen- und Schließstellung verhindert.

Um in der Schließstellung des schiebetürartigen Verschlusselements eine zuverlässige Abdichtung der Zugangsöffnung und somit des Handhabungskammerinnenraums zu gewährleisten, kann zwischen dem schiebetürartigen Verschlusselement und der die Zugangsöffnung umfassenden Handhabungskammerwandung ein Dichtungselement angeordnet oder ausgebildet sein.

Das Dichtungselement ist zweckmäßig an jeweiligen Abschnitten des schiebetürartigen Verschlusselements, welche in der Schließstellung des schiebetürartigen Verschlusselements an oder im Bereich der die Zugangsöffnung begrenzenden Abschnitte der die Zugangsöffnung umfassenden Handhabungskammerwandung(en) angeordnet ist, angeordnet oder ausgebildet. Jeweilige Abschnitte können sich zumindest abschnittsweise auch entlang eines entsprechenden Ansatzelements erstrecken. Das Dichtungselement erstreckt sich typischerweise vollständig umlaufend um die jeweiligen Abschnitte des schiebetürartigen Verschlusselements, welche in der Schließstellung des schiebetürartigen Verschlusselements an oder im Bereich der die Zugangsöffnung begrenzenden Abschnitte der die Zugangsöffnung umfassenden Handhabungskammerwandung(en) angeordnet oder ausgebildet sind. Mithin werden entsprechende Abschnitte der die Zugangsöffnung umfassenden Handhabungskammerwandung(en) durch das Dichtungselement abgedeckt, sodass sich dort kein Baumaterial ab- oder anlagern kann. Entlang seiner Erstreckung um die jeweiligen Abschnitte des schiebetürartigen Verschlusselements, welche in der Schließstellung des schiebetürartigen Verschlusselements an oder im Bereich der die Zugangsöffnung begrenzenden Abschnitte der die Zugangsöffnung umfassenden Handhabungskammerwandung(en) angeordnet oder ausgebildet sind, erstreckt sich das Dichtungselement in unterschiedlichen Raumrichtungen.

Das Dichtungselement kann, z. B. durch eine form- und/oder kraftschlüssige Befestigung, wie z. B. eine Pressbefestigung, (beschädigungs- bzw. zerstörungsfrei) lösbar an dem schiebetürartigen Verschlusselement befestigt sein. Alternativ kann das Dichtungselement, z. B. durch eine stoffschlüssige Befestigung, wie z. B. eine Klebebefestigung, (beschädigungs- bzw. zerstörungsfrei), unlösbar an dem schiebetürartigen Verschlusselement befestigt sein.

Das Dichtungselement kann im Sinne einer "aufblasbaren Dichtung" einen mit einem Füllmedium, insbesondere einem, gegebenenfalls inerten, Füllgas, z. B. Argon, Kohlenstoffdioxid, Stickstoff, befüllbaren Dichtungselementinnenraum aufweisen. Der Dichtungselementinnenraum kann sich, insbesondere kanalartig bzw. -förmig, zumindest abschnittsweise, insbesondere vollständig, über die Länge des Dichtungselements durch das Dichtungselement erstrecken. Das Dichtungselement kann sonach über Befüllen des Dichtungselementinnenraums mit einem Füllmedium von einem ein erstes Raumvolumen einnehmenden unbefüllten Zustand in einen ein im Vergleich größeres zweites Raumvolumen einnehmenden befüllten Zustand, und umgekehrt, überführbar. Insbesondere der befüllte Zustand des Dichtungselements gewährleistet in der Schließstellung des schiebetürartigen Verschlusselements eine besonders zuverlässige Abdichtung der Zugangsöffnung und somit des Handhabungskammerinnenraums.

Die Handhabungseinrichtung kann eine Erfassungseinrichtung, welche zur Erfassung des in die Schließstellung bewegten schiebetürartigen Verschlusselements eingerichtet ist, und eine der Erfassungseinrichtung zuordenbare oder zugeordnete Befüllungseinrichtung, welche insbesondere zur Befüllung des Dichtungselementinnenraums mit einem Füllmedium in Abhängigkeit einer von der Erfassungseinrichtung gelieferten, das in die Schließstellung bewegte schiebetürartige Verschlusselement anzeigenden Schließstellungserfassungsinformation eingerichtet ist, umfassen. Über das Zusammenwirken der Erfassungseinrichtung und der z. B. als Saug- und/oder Gebläseeinrichtung ausgebildeten oder eine solche umfassenden Befüllungseinrichtung ist ein automatisierbares Befüllen des Dichtungselementinnenraums mit einem entsprechenden Füllmedium möglich, sobald das schiebetürartige Verschlusselement in die Schließstellung bewegt ist. Über die Befüllungseinrichtung kann auch ein automatisierbares Entleeren eines Füllmediums aus dem Dichtungselementinnenraum möglich sein, sobald das schiebetürartige Verschlusselement in die Offenstellung bewegt ist. Eine Erfassung, dass das schiebetürartige Verschlusselement in die Offen- bzw. Schließstellung bewegt ist, kann über geeignete Erfassungselemente, d. h. insbesondere elektrische, mechanische oder optische Erfassungselemente, der Erfassungseinrichtung erfolgen; hierbei kann es sich z. B. um elektrische Kontakte, mechanische Kontakte oder optische Schranken handeln.

Neben der Handhabungseinrichtung betrifft die Erfindung auch eine Vorrichtung zur additiven Herstellung dreidimensionaler Objekte. Die Vorrichtung ist zur additiven Herstellung dreidimensionaler Objekte, d. h. beispielsweise technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial in den dem schichtbezogenen Querschnitt des herzustellenden Objekts entsprechenden Bereichen eingerichtet. Bei dem Baumaterial kann es sich um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein. Denkbar ist es auch, dass die Vorrichtung als SEBS-Vorrichtung, d. h. als zur Durchführung selektiver Elektronenstrahlschmelzverfahren (SEBS-Verfahren), ausgebildet ist.

Die Vorrichtung umfasst die zur Durchführung additiver Bauvorgänge typischerweise erforderlichen Funktionskomponenten. Hierzu zählen insbesondere eine Beschichtungseinrichtung und eine Belichtungseinrichtung. Die Beschichtungseinrichtung ist zur Ausbildung selektiv zu belichtender bzw. selektiv zu verfestigender Baumaterialschichten in einer Bauebene bzw. einem Baufeld der Vorrichtung, in welcher bzw. in welchem die sukzessive schichtweise selektive Belichtung und die damit einhergehende sukzessive schichtweise selektive Verfestigung von Baumaterialschichten aus dem vermittels eines Energiestrahls verfestigbaren Baumaterial erfolgt, eingerichtet. Die Belichtungseinrichtung ist zur selektiven Belichtung selektiv zu verfestigender Baumaterialschichten in der Bauebene der Vorrichtung eingerichtet.

Die Vorrichtung umfasst als funktionellen Bestandteil wenigstens eine wie beschriebene Handhabungseinrichtung bzw. ist der Vorrichtung wenigstens eine wie beschriebene Handhabungseinrichtung zugeordnet. Insoweit gelten sämtliche Ausführungen im Zusammenhang mit der Handhabungseinrichtung analog für die Vorrichtung.

Die Erfindung ist anhand von Ausführungsbeispielen in den Zeichnungsfiguren näher erläutert. Dabei zeigt:
- Fig. 1, 2: je eine perspektivische Darstellung einer Handhabungseinrichtung gemäß einem Ausführungsbeispiel; und
- Fig. 3: eine vergrößerte Darstellung der in den Fig. 1, 2 gezeigten Einzelheit III aus einer anderen Blickrichtung.

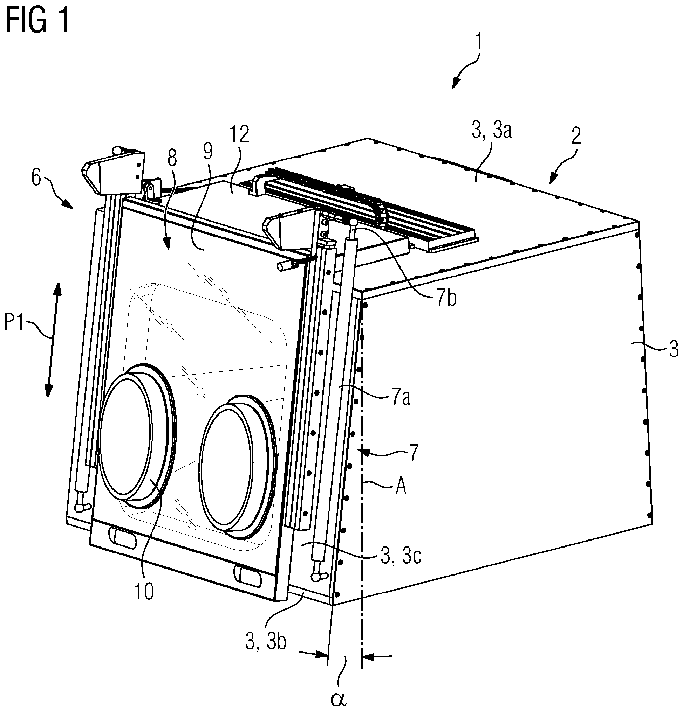

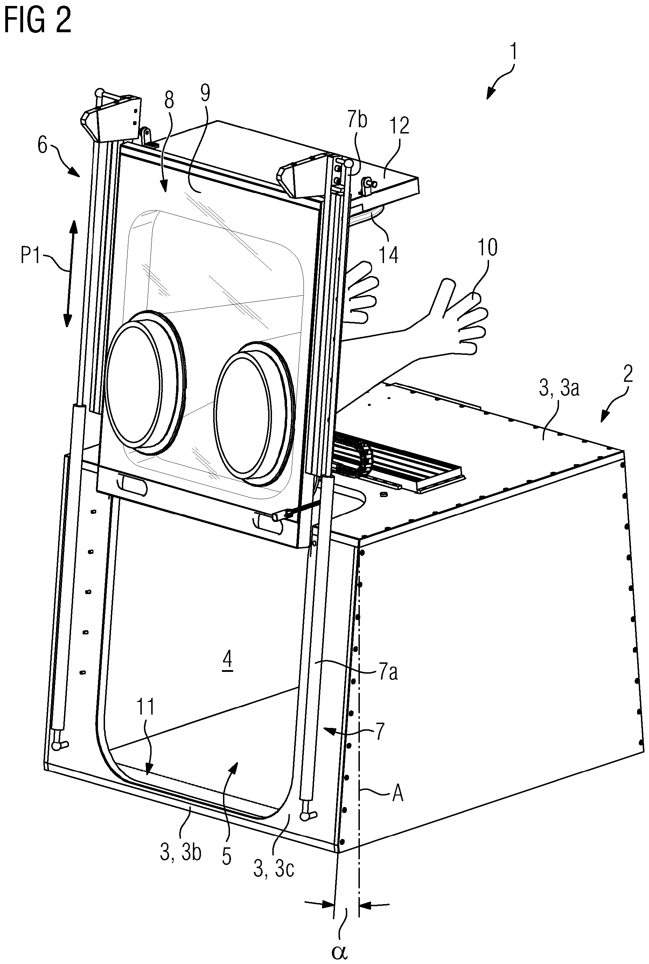

Die Fig. 1, 2 zeigen je eine perspektivische Darstellung einer Handhabungseinrichtung 1 gemäß einem Ausführungsbeispiel. Die Handhabungseinrichtung 1 ist zur Handhabung additiv hergestellter dreidimensionaler Objekte (nicht gezeigt), d. h. z. B. technischer Bauteile bzw. technischer Bauteilgruppen, eingerichtet. Die vermittels der Handhabungseinrichtung 1 gegebene Möglichkeit der Handhabung additiv hergestellter dreidimensionaler Objekte ist typischerweise im Zusammenhang mit dem sogenannten "Auspacken" additiv hergestellter dreidimensionaler Objekte, d. h. der Entfernung von dem die additiv hergestellten Objekte umgebenden, nicht verfestigtem Baumaterial, erforderlich.

Die Handhabungseinrichtung 1 umfasst eine Handhabungskammer 2. Die Handhabungskammer 2 umfasst mehrere plattenartig bzw. förmig ausgebildete Handhabungskammerwandungen 3. Eine Handhabungskammerwandung 3a bildet eine Oberseite der Handhabungskammer 2, eine der die Oberseite der Handhabungskammer 2 bildenden Handhabungskammerwandung 3a gegenüber liegend angeordnete Handhabungskammerwandung 3b bildet eine Boden- bzw. Unterseite der Handhabungskammer 2, eine winklig zu den Handhabungskammerwandungen 3a, 3b angeordnete Handhabungskammerwandung 3c bildet eine Vorderseite der Handhabungskammer 2. Die die Handhabungskammer 2 bildenden Handhabungskammerwandungen 3 sind so relativ zueinander angeordnet, dass sich eine quaderartige bzw. quaderähnliche Grundform der Handhabungskammer 2 ergibt.

Die Handhabungskammerwandungen 3 begrenzen einen Handhabungskammerinnenraum 4 (vgl. insbesondere Fig. 2), in welchem ein "auszupackendes" additiv hergestelltes dreidimensionales Objekt anordenbar ist. Die Handhabungskammerwandung 3a umfasst eine bzw. wenigstens einen Teil einer Zugangsöffnung 5, welche eine Zugangsmöglichkeit, insbesondere für einen Benutzer, in den Handhabungskammerinnenraum 4 schafft. Die durch eine Aussparung 13 in der Handhabungskammerwandung 3c gebildete Zugangsöffnung 5 ermöglicht ein Eingreifen in den Handhabungskammerinnenraum 4, etwa um ein additiv hergestelltes dreidimensionales Objekt "auszupacken" oder ein "ausgepacktes" additiv hergestelltes dreidimensionales Objekt aus dem Handhabungskammerinnenraum 4 zu entnehmen.

Die Zugangsöffnung 5 ist über ein dieser zugeordnetes schiebetürartiges Verschlusselement 6 - bei dem Verschlusselement 6 handelt es sich sonach um eine Schiebetür - öffen- und verschließbar; die Zugangsöffnung 5 kann über das Verschlusselement 6 sonach geöffnet (freigegeben) und verschlossen (nicht freigegeben) werden. Das Verschlusselement 6 ist, insbesondere in einer linearen Bewegungsbahn, in einer durch den Doppelpfeil P1 angedeuteten vertikalen Richtung zwischen einer in Fig. 2 gezeigten Offenstellung, in welcher das Verschlusselement 6 die Zugangsöffnung 5 freigibt, sodass eine Eingriffs- bzw. Zugangsmöglichkeit in den Handhabungskammerinnenraum 4 geschaffen ist, und einer in Fig. 1 gezeigten Schließstellung, in welcher das Verschlusselement 6 die Zugangsöffnung 5 nicht freigibt, sodass keine Eingriffs- bzw. Zugangsmöglichkeit in den Handhabungskammerinnenraum 4 geschaffen ist, relativ zu der die Zugangsöffnung 5 umfassenden Handhabungskammerwandung 3c gelagert.

Zur schiebebeweglichen Lagerung des Verschlusselements 6 ist dem Verschlusselement 6 eine Lagerungs- bzw. Führungseinrichtung 7, welche zur schiebebeweglichen Lagerung bzw. Führung des Verschlusselements 6 zwischen der Offenstellung und der Schließstellung, und umgekehrt, eingerichtet ist, zugeordnet. Die Lagerungs- bzw. Führungseinrichtung 7 umfasst erste Lagerungs- bzw. Führungselemente 7a, welche an der die Zugangsöffnung 5 umfassenden Handhabungskammerwandung 3c angeordnet sind, und relativ zu diesen bewegbar gelagerte zweite Lagerungs- bzw. Führungselemente 7b, welche mit dem Verschlusselement 6 bewegungsgekoppelt sind. Die Lagerungs- bzw. Führungseinrichtung 7 ist in dem Ausführungsbeispiel als Kolben-Zylinder-Anordnung ausgebildet; mithin sind erste Lagerungs- bzw. Führungselemente 7a durch Zylinder und zweite Lagerungs- bzw. Führungselemente 7b durch innerhalb jeweiliger Zylinder angeordnete Kolbenstangen gebildet.

Ersichtlich umfasst das Verschlusselement 6 einen rahmenartigen Grundkörper 8. An dem Grundkörper 8 ist eine eine Einblickmöglichkeit in den Handhabungskammerinnenraum 4 schaffende Sichtscheibe 9, d. h. z. B. eine Glasscheibe, angeordnet. An der Sichtscheibe 9 sind von einem Benutzer oder einem Roboter nutzbare Betätigungs- oder Handhabungselemente 10 angeordnet. Bei entsprechenden Betätigungs- bzw. Handhabungselementen 10 handelt es sich in dem Ausführungsbeispiel um einen isolierten Eingriff in den Handhabungskammerinnenraum 4 ermöglichende Handschuhe (Schutzhandschuhe); mithin ist die Handhabungskammer 2 als Handschuhkasten ("Glovebox") ausgebildet.

Ersichtlich ist die die Zugangsöffnung 5 umfassende Handhabungskammerwandung 3c, insbesondere in einem Winkelbereich zwischen 1 und 45°, bevorzugt in einem Winkelbereich zwischen 5 und 15°, besonders bevorzugt in einem Winkel α von 10°, schräg bezüglich einer vertikalen Raumachse A (vgl. Fig. 1, 2) verlaufend angeordnet. Aus der schräg verlaufenden Anordnung der Handhabungskammerwandung 3c ergibt sich, dass die Oberseite der Handhabungskammer 2 kleiner als die Boden- bzw. Unterseite der Handhabungskammer 2 ist.

Die Handhabungskammerwandung 3c ist derart schräg bezüglich der vertikalen Raumachse A verlaufend angeordnet, dass die bzw. eine die Boden- bzw. Unterseite der Handhabungskammer 2 bildende Handhabungskammerwandung 3b flächenmäßig größer als die Oberseite der Handhabungskammer 2 bildende Handhabungskammerwandung 3a ist. Die die Boden- bzw. Unterseite der Handhabungskammer 2 bildende Handhabungskammerwandung 3b bildet derart wenigstens in dem Bereich, in welchem diese die die Oberseite der Handhabungskammer 2 bildende Handhabungskammerwandung 3a flächenmäßig überragt, insbesondere in der Offenstellung des Verschlusselements 6, einen Sammelbereich 11 für Baumaterial. Sich gegebenenfalls von dem Verschlusselement 6 lösendes Baumaterial sammelt sich in dem einen Teilbereich der Bodenfläche der Handhabungskammer 2 bildenden Sammelbereich 11, ein unerwünschter Austritt von Baumaterial aus der Handhabungskammer 2 ist damit nicht bzw. kaum möglich.

Die in der vertikalen Richtung schiebebewegliche Lagerung des Verschlusselements 6 stellt sonach eine probate Maßnahme dar, um einen unerwünschten Austritt von Baumaterial aus der Handhabungskammer 2 zu verhindern bzw. zumindest zu reduzieren.

An dem Grundkörper 8 des Verschlusselements 6 ist ein einen ersten Abschnitt der Oberseite der Handhabungskammer 2 bildendes plattenartiges Ansatzelement 12 angeordnet. Ersichtlich ist das Ansatzelement 12 bezüglich der Ebene des Grundkörpers 8 winklig ausgerichtet an dem Grundkörper 8 angeordnet. Das Ansatzelement 12 ist in der bzw. parallel zu der Ebene der Oberseite der Handhabungskammer 2 ausgerichtet an dem Grundkörper 8 des Verschlusselements 6 angeordnet.

Die einen zweiten, d. h. typischerweise den wesentlichen, Abschnitt der Oberseite der Handhabungskammer 2 bildende Handhabungskammerwandung 3a weist eine an die geometrisch-konstruktive Gestaltung des Ansatzelements 12 angepasste Aussparung 13 auf, um (in der Schließstellung des Verschlusselements 6) eine geschlossene Oberseite der Handhabungskammer 2 zu bilden. Das Ansatzelement 12 deckt die Aussparung 13 in der Schließstellung des Verschlusselements 6 vollständig ab (vgl. Fig. 1). Das Ansatzelement 12 und die die Aussparung 13 aufweisende Handhabungskammerwandung 3a bilden in der Schließstellung des Verschlusselements 6 gemeinsam die geschlossene Oberseite der Handhabungskammer 2 (vgl. Fig. 1).

Die Aussparung 13 ist zweckmäßig, als diese eine Schiebebewegung des Verschlusselements 6 zwischen der Offen- und Schließstellung, und umgekehrt, in einer (einzigen) Bewegungsbahn ermöglicht. Es besteht sonach keine Möglichkeit, dass ein an dem Ansatzelement 13 angeordnetes Dichtungselement 14 bei Schiebebewegungen des Verschlusselements 6 zwischen der Offen- und Schließstellung, und umgekehrt, gegen die Oberseite der Handhabungskammer 2 bewegt wird. Zudem kann durch Aussparung 13 ein Freiraum gebildet sein, welcher eine Kontaktierung von an dem Verschlusselement 6 angeordneten Funktionselementen, d. h. z. B. den Handhabungselementen 10, mit der die Oberseite der Handhabungskammer 2 bildenden Handhabungskammerwandung 3a und ein damit etwaig verbundenes Lösen von an den Handhabungselementen 10 anhaftendem Baumaterial bei Bewegungen des Verschlusselements 6 zwischen der Offen- und Schließstellung verhindert.

Um in der Schließstellung des Verschlusselements 6 eine zuverlässige Abdichtung der Zugangsöffnung 5 und somit des Handhabungskammerinnenraums 4 zu gewährleisten, ist zwischen dem Verschlusselement 6 und der die Zugangsöffnung 5 umfassenden Handhabungskammerwandung 3c ein Dichtungselement 14 angeordnet.

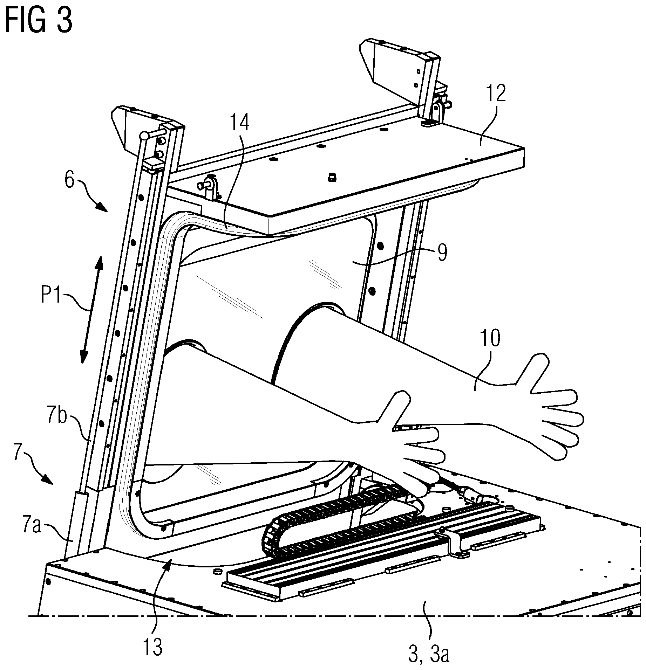

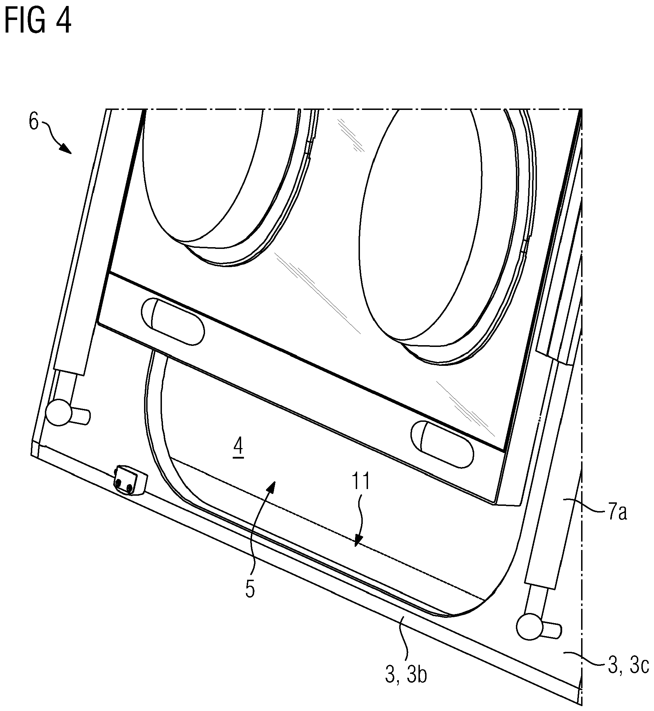

Das Dichtungselement 14 ist an jeweiligen Abschnitten des Verschlusselements 6, welche in der Schließstellung des Verschlusselements 6 an oder im Bereich der die Zugangsöffnung 5 begrenzenden Abschnitte der Handhabungskammerwandung 3c angeordnet, angeordnet. Jeweilige Abschnitte erstrecken sich in dem Ausführungsbeispiel zumindest abschnittsweise auch entlang des Ansatzelements 12. Das Dichtungselement 14 erstreckt sich in dem Ausführungsbeispiel vollständig umlaufend um die jeweiligen Abschnitte des Verschlusselements 6, welche in der Schließstellung des Verschlusselements 6 an oder im Bereich der die Zugangsöffnung 5 begrenzenden Abschnitte der die Zugangsöffnung 5 umfassenden Handhabungskammerwandung 3c angeordnet sind. Mithin werden entsprechende Abschnitte der die Zugangsöffnung 5 umfassenden Handhabungskammerwandung 3c durch das Dichtungselement 14 abgedeckt, sodass sich dort kein Baumaterial ab- oder anlagern kann. Entlang seiner Erstreckung um die jeweiligen Abschnitte des Verschlusselements 6, welche in der Schließstellung des Verschlusselements 6 an oder im Bereich der die Zugangsöffnung 5 begrenzenden Abschnitte der die Zugangsöffnung 5 umfassenden Handhabungskammerwandung 3c angeordnet sind, erstreckt sich das Dichtungselement 14 in unterschiedlichen Raumrichtungen (vgl. Fig. 3).

Das Dichtungselement 14 kann, z. B. durch eine form- und/oder kraftschlüssige Befestigung, wie z. B. eine Pressbefestigung, (beschädigungs- bzw. zerstörungsfrei) lösbar an dem Verschlusselement 6 befestigt sein. Alternativ kann das Dichtungselement 14, z. B. durch eine stoffschlüssige Befestigung, wie z. B. eine Klebebefestigung, (beschädigungs- bzw. zerstörungsfrei), unlösbar an dem Verschlusselement 6 befestigt sein.

Das Dichtungselement 14 kann im Sinne einer "aufblasbaren Dichtung" einen mit einem Füllmedium, insbesondere einem, gegebenenfalls inerten, Füllgas, z. B. Argon, Kohlenstoffdioxid, Stickstoff, befüllbaren Dichtungselementinnenraum aufweisen. Der Dichtungselementinnenraum kann sich, insbesondere kanalartig bzw. -förmig, zumindest abschnittsweise, insbesondere vollständig, über die Länge des Dichtungselements 14 durch das Dichtungselement 14 erstrecken. Das Dichtungselement 14 kann sonach über Befüllen des Dichtungselementinnenraums mit einem Füllmedium von einem ein erstes Raumvolumen einnehmenden unbefüllten Zustand in einen ein im Vergleich größeres zweites Raumvolumen einnehmenden befüllten Zustand, und umgekehrt, überführbar sein. Der befüllte Zustand des Dichtungselements 14 gewährleistet in der Schließstellung des Verschlusselements 6 eine besonders zuverlässige Abdichtung der Zugangsöffnung 5 und somit des Handhabungskammerinnenraums 4.

Die Handhabungseinrichtung 1 kann eine Erfassungseinrichtung (nicht gezeigt), welche zur Erfassung des in die Schließstellung bewegten Verschlusselements 6 eingerichtet ist, und eine der Erfassungseinrichtung zuordenbare oder zugeordnete Befüllungseinrichtung (nicht gezeigt), welche insbesondere zur Befüllung des Dichtungselementinnenraums mit einem Füllmedium in Abhängigkeit einer von der Erfassungseinrichtung gelieferten, das in die Schließstellung bewegte Verschlusselement 6 anzeigenden Schließstellungserfassungsinformation eingerichtet ist, umfassen. Über das Zusammenwirken der Erfassungseinrichtung und der z. B. als Saug- und/oder Gebläseeinrichtung ausgebildeten oder eine solche umfassenden Befüllungseinrichtung ist ein automatisierbares Befüllen des Dichtungselementinnenraums mit einem entsprechenden Füllmedium möglich, sobald das Verschlusselement 6 in die Schließstellung bewegt ist. Über die Befüllungseinrichtung kann auch ein automatisierbares Entleeren des Füllmediums aus dem Dichtungselementinnenraum möglich sein, sobald das Verschlusselement 6 in die Offenstellung bewegt ist. Eine Erfassung, dass das Verschlusselement 6 in die Offen-bzw. Schließstellung bewegt ist, kann über geeignete Erfassungselemente, d. h. insbesondere elektrische, mechanische oder optische Erfassungselemente, der Erfassungseinrichtung erfolgen; hierbei kann es sich z. B. um elektrische Kontakte, mechanische Kontakte oder optische Schranken handeln.

Die Handhabungseinrichtung 1 kann einer Vorrichtung (nicht gezeigt) zur additiven Herstellung dreidimensionaler Objekte zugeordnet sein bzw. einen funktionellen Bestandteil einer solchen bilden. Die Vorrichtung ist zur additiven Herstellung dreidimensionaler Objekte, d. h. beispielsweise technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial in den dem schichtbezogenen Querschnitt des herzustellenden Objekts entsprechenden Bereichen eingerichtet. Bei dem Baumaterial kann es sich um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein. Denkbar ist es auch, dass die Vorrichtung als SEBS-Vorrichtung, d. h. als zur Durchführung selektiver Elektronenstrahlschmelzverfahren (SEBS-Verfahren), ausgebildet ist.

## Patentansprüche

1. Handhabungseinrichtung (1) für eine Vorrichtung zur additiven Herstellung dreidimensionaler Objekte, welche Handhabungseinrichtung (1) zur Handhabung eines additiv hergestellten dreidimensionalen Objekts eingerichtet ist, umfassend:
eine Handhabungskammer (2), welche einen durch eine oder mehrere Handhabungskammerwandungen (3) begrenzten Handhabungskammerinnenraum (4) umfasst, wobei
wenigstens eine Handhabungskammerwandung (3) eine eine Zugangsmöglichkeit, insbesondere für einen Benutzer, in den Handhabungskammerinnenraum (4) schaffende Zugangsöffnung (5) umfasst,
**dadurch gekennzeichnet, dass**
die wenigstens eine Zugangsöffnung (5) über ein dieser zugeordnetes schiebetürartiges Verschlusselement (6), welches in einer vertikalen Richtung schiebebeweglich zwischen einer Offenstellung, in welcher das schiebetürartige Verschlusselement (6) die wenigstens eine Zugangsöffnung (5) freigibt, und einer Schließstellung, in welcher das schiebetürartige Verschlusselement (6) die Zugangsöffnung (5) nicht freigibt, relativ zu der die Zugangsöffnung (5) umfassenden Handhabungskammerwandung (3) gelagert ist, öffen- und verschließbar ist.

2. Handhabungseinrichtung (1) nach Anspruch 1, **dadurch gekennzeichnet, dass** die die wenigstens eine Zugangsöffnung (5) umfassende Handhabungskammerwandung (3), insbesondere in einem Winkelbereich zwischen 1 und 45°, bevorzugt in einem Winkelbereich zwischen 5 und 15°, schräg bezüglich einer vertikalen Raumachse verlaufend angeordnet oder ausgebildet ist.

3. Handhabungseinrichtung (1) nach Anspruch 2, **dadurch gekennzeichnet, dass** die wenigstens eine Zugangsöffnung (5) umfassende Handhabungskammerwandung (3) schräg bezüglich einer vertikalen Raumachse verlaufend angeordnet oder ausgebildet ist, derart, dass die die Unterseite der Handhabungskammer (2) bildende Handhabungskammerwandung (3) flächenmäßig größer als die die Oberseite der Handhabungskammer (2) bildende Handhabungskammerwandung (3) ist, wobei die die Unterseite der Handhabungskammer (2) bildende Handhabungskammerwandung (3) wenigstens in dem Bereich, in welchem diese die die Oberseite der Handhabungskammer (2) bildende Handhabungskammerwandung (3) flächenmäßig überragt, insbesondere in der Offenstellung des schiebetürartigen Verschlusselements (6), einen Sammelbereich (11) für Baumaterial bildet.

4. Handhabungseinrichtung (1) nach einem der vorhergehenden Ansprüche, **dadurch gekennzeichnet, dass** das schiebetürartige Verschlusselement (6) einen, insbesondere rahmenartigen bzw. -förmigen, Grundkörper (8) umfasst, an welchem ein einen ersten Abschnitt der Oberseite der Handhabungskammer (2) bildendes Ansatzelement (12) angeordnet oder ausgebildet.

5. Handhabungseinrichtung (1) nach Anspruch 4, **dadurch gekennzeichnet, dass** die einen zweiten Abschnitt der Oberseite der Handhabungskammer (2) bildende Handhabungskammerwandung (3) eine an die geometrisch-konstruktive Gestaltung des Ansatzelements (12) angepasste Aussparung (13) aufweist.

6. Handhabungseinrichtung (1) nach Anspruch 5, **dadurch gekennzeichnet, dass** das Ansatzelement (12) und die die Aussparung (13) aufweisende Handhabungskammerwandung (3) in der Schließstellung des schiebetürartigen Verschlusselements (6) gemeinsam eine geschlossene Oberseite der Handhabungskammer (2) bilden.

7. Handhabungseinrichtung (1) nach einem der vorhergehenden Ansprüche, **gekennzeichnet durch** ein zwischen dem schiebetürartigen Verschlusselement (6) und der die Zugangsöffnung (5) umfassenden Handhabungskammerwandung (3) angeordnetes oder ausgebildetes Dichtungselement (14).

8. Handhabungseinrichtung (1) nach Anspruch 7, **dadurch gekennzeichnet, dass** das Dichtungselement (14) einen mit einem Füllmedium befüllbaren Dichtungselementinnenraum aufweist, wobei das Dichtungselement (14) über Befüllen des Dichtungselementinnenraums mit einem Füllmedium von einem ein erstes Raumvolumen einnehmenden unbefüllten Zustand in einen ein im Vergleich größeres zweites Raumvolumen einnehmenden befüllten Zustand überführbar ist.

9. Handhabungseinrichtung (1) nach Anspruch 7 oder 8, **dadurch gekennzeichnet, dass** das Dichtungselement (14) an jeweiligen Abschnitten des schiebetürartigen Verschlusselements (6), welche in der Schließstellung des schiebetürartigen Verschlusselements (6) an oder im Bereich der die Zugangsöffnung (5) begrenzenden Abschnitte der die Zugangsöffnung (5) umfassenden Handhabungskammerwandung (3) angeordnet sind, angeordnet oder ausgebildet ist.

10. Handhabungseinrichtung (1) nach einem der Ansprüche 7 bis 9, **gekennzeichnet durch** eine Erfassungseinrichtung, welche zur Erfassung des in die Schließstellung bewegten schiebetürartigen Verschlusselements (6) eingerichtet ist, und eine der Erfassungseinrichtung zuordenbare oder zugeordnete Befüllungseinrichtung, welche zur Befüllung des Dichtungselementinnenraums mit einem Füllmedium in Abhängigkeit einer von der Erfassungseinrichtung gelieferten, das in die Schließstellung bewegte schiebetürartige Verschlusselement (6) anzeigenden Schließstellungserfassungsinformation eingerichtet ist.

11. Handhabungseinrichtung (1) nach einem der vorhergehenden Ansprüche, **gekennzeichnet durch** eine dem schiebetürartigen Verschlusselement (6) zugeordnete Lagereinrichtung (7), welche zur schiebebeweglichen Lagerung des schiebetürartigen Verschlusselements (6) zwischen der Offenstellung und der Schließstellung eingerichtet ist.

12. Vorrichtung zur additiven Herstellung dreidimensionaler Objekte durch sukzessives schichtweises selektives Belichten und damit einhergehendes sukzessives schichtweises selektives Verfestigen von Baumaterialschichten aus einem vermittels eines Energiestrahls verfestigbaren Baumaterial, umfassend wenigstens eine Handhabungseinrichtung (1) nach einem der vorhergehenden Ansprüche.
